# EUROPÄISCHE PATENTSCHRIFT

(11) **EP 0 614 419 B1**
(45) Veröffentlichungstag und Bekanntmachung des Hinweises auf die Patenterteilung: **02.11.1995**
(21) Anmeldenummer: 92924681.7
(22) Anmeldetag: 07.12.1992
(51) Int. Cl.: B60B 7/00

(54) **LAUFRAD FÜR EIN FAHRRAD**
BICYCLE WHEEL
ROUE DE BICYCLETTE

(30) Priorität: 07.12.1991 DE 9115199 U; 24.01.1992 DE 4201953; 21.09.1992 DE 4231539
(43) Veröffentlichungstag der Anmeldung: 14.09.1994
(73) Patentinhaber: F.W. BRÖKELMANN ALUMINIUMWERK GmbH & CO., D-59469 Ense (DE); KLIEBER, Jochen, D-83342 Tacherting (DE)
(72) Erfinder: KLIEBER, Jochen, D-8221 Tacherting (DE); WUTTKE, Reinhold, D-5760 Arnsberg 1 (DE)
(74) Vertreter: Wallinger, Michael, Dr.-Ing.
(86) Internationale Anmeldenummer: EP9202824
(87) Internationale Veröffentlichungsnummer: WO9311950

(56) Entgegenhaltungen:
- EP-A- 0 223 164
- EP-A- 0 346 923
- US-A- 3 004 798
- US-A- 4 682 821
- US-A- 4 712 838

## Beschreibung

Die Erfindung geht aus von einem Laufrad für ein Fahrrad mit einer Vielzahl von zwischen einem umlaufenden Felgenprofil und einer Nabe angeordneten Speichen wobei wenigstens eine Abdeckungsscheibe zur seitlichen Verkleidung des Laufrades an diesem lösbar befestigt ist.

Bei Fahrrädern aller Art (Tourenrad, Rennrad, Mountainbike usw.) wird ein Großteil der vom Fahrer eingesetzten Leistung zur Überwindung des Luftwiderstandes verbraucht. Den größten Beitrag zum Luftwiderstand leistet die Frontfläche des Fahrers. Ein weiterer wesentlicher Beitrag wird von Laufrädern geleistet.

Um den Beitrag der Laufräder zum Luftwiderstand zu vermindern, sind beispielsweise aus der Praxis verschiedene Vollscheibenräder bekannt. Diese sind auf beiden Seiten der Räder vollständig verkleidet, wobei die Verkleidung gleichzeitig als Zug- und andere Kräfte während der Fahrt aufnehmendes Element dient.

Gegenüber den mit Speichen versehenen Speichenrädern weisen die Vollscheibenräder die Nachteile auf, daß Fahrbahnunebenheiten deutlich schlechter weggefedert werden.

Außerdem rollen die Vollscheibenräder spürbar härter ab als die Speichenräder. Aufgrund der Steifheit der Verkleidungen der Vollscheibenräder ergibt sich während der Fahrt auch ein erheblich erhöhter Geräuschpegel.

Um die aerodynamischen Vorteile des Vollscheibenrades auf ein herkömmliches Speichenrad zu übertragen, schlägt die US-A-47 12 838 beispielsweise vor, an den Enden der Speichen benachbart zum Felgenprofil eine Vielzahl von Klemmelementen anzuclipsen, in die eine Abdeckungsscheibe zur seitlichen Verkleidung des Laufrades eingesetzt werden kann.

Bei einer weiteren, aus der Praxis bekannten Lösung, wird auf das Felgenprofil, insbesondere auf die Felgenflanken, ein Rand eines auf der Nabe gelagerten Kunststoffilms aufgeklebt.

Sowohl die Abdeckungsscheibe als auch der Kunststoffilm sind in der Regel beidseitig am Laufrad angeordnet, wobei die Speichen innerhalb der Verkleidung angeordnet sind. Bei der aus der US-A-47 12 838 bekannten Abdeckungsscheibe ist von Nachteil, daß zwischen Scheibenumfang und Felgenprofil ein Luftschlitz verbleibt, der zu einer Verschlechterung der Aerodynamik im Vergleich mit einem Vollscheibenrad führt. Außerdem müssen bei jedem Wechsel der Abdeckungsscheibe eine Vielzahl von Klemmelementen gelöst werden. Da diese nur an den Speichen angeclipst sind, können sie verlorengehen. In diesem Fall kann die Abdeckungsscheibe nicht mehr gleichmäßig entlang ihres Umfangs am Laufrad gehalten werden.

Bei dem mit einem Kunststoffilm zur Verkleidung verklebten Laufrad, muß der Kunststoffilm im Falle einer Beschädigung zeit- und kostenintensiv ausgetauscht werden. Sowohl bei dem mit einer Abdeckungsscheibe versehenen Laufrad als auch bei dem mit dem Kunststoffilm verklebten Laufrad ist die Zugänglichkeit zu einem Ventil zum Aufpumpen des Reifens erheblich erschwert.

Es ist daher Aufgabe der Erfindung, die lösbare Befestigung der seitlichen Verkleidung des Laufrades zu verbessern, wobei gleichzeitig eine perfekte Anpassung der Verkleidung an alle Felgen, ohne Kanten, Schrauben, Luftschlitze oder dergl. gegeben ist.

Diese Aufgabe wird bei einem Laufrad mit den Merkmalen des Oberbegriffs des Anspruchs 1, wie es aus der US-A-47 12 838 bekannt ist, dadurch gelöst, daß im Felgenprofil seitlich wenigstens eine umlaufende Rastnut ausgebildet ist, in welche die Abdeckungsscheibe einrastbar ist.

Die Rastnut ist in dem Bereich des Felgenprofils zwischen den im Felgenprofil festgelegten Speichen und der Felgenflanke ausgebildet. Eine entsprechende Rastnut ist in jedem Felgenprofil ausbildbar, wie z.B. bei Alufelgen, Nirosta-Felgen, Felgen mit Hohlkammerprofil oder Felgen mit konkavem Profil. Daher sind alle Felgenprofile sowohl für Falt- als auch Drahtreifen verwendbar. Die Abdeckungsscheibe ist gemäß der Erfindung einfach auf die Nabe aufsetzbar und wird anschließend in die Rastnut entlang ihres Umfangs eingerastet. Da die Rastnut direkt im Felgenprofil ausgebildet ist, sind keine zusätzlichen Klemmelemente notwendig. Zwischen Abdeckungsscheibe und Felgenprofil bzw. Felgenflanke werden keine Luftschlitze bzw. Kanten gebildet. Auf diese Weise ergibt sich gemäß der Erfindung eine vollständige und aerodynamisch optimale seitliche Verkleidung des Laufrades, wie sie sonst nur bei einem Vollscheibenrad gegeben ist. Gleichzeitig weist das erfindungsgemäße Laufrad alle Vorteile eines Speichenrades auf. So sind alle Naben- und Speichenarten, die für Fahrräder verwendet werden, einsetzbar. Außer den konventionellen Speichen ist auch eine Verbindung von Felgenprofil und Nabe durch gespannte, hochfeste Fäden, z.B. aus Kevlar möglich. Aufgrund der vollständigen Verkleidung des Laufrades ist der verkleidete Innenraum optimal vor Feuchtigkeit, Schmutz und mechanischer Beanspruchung beispielsweise durch hereinfliegende Steine oder dergl. geschützt.

Gleichzeitig ergeben sich im Vergleich zu dem mit einem Kunststoffilm verklebten Laufrad vollständig nutzbare Felgenflanken, die als Bremsflächen genützt werden können. Außerdem bleibt die einfache Reparierbarkeit oder Zugänglichkeit zum Ventil des Speichenrades im Gegensatz zum Vollscheibenrad bzw. zu dem mit einem Kunststoffilm verklebten Speichenrad erhalten.

Bei einer vorteilhaften Ausführungsform der Erfindung ist die Abdeckungsscheibe aus einem im wesentlichen kreisförmigen Spannring und einer auf diesem aufgespannten Bespannung gebildet. Der Durchmesser des Spannrings ist gerade so groß, daß die Abdeckungsscheibe in einfacher Weise in die Rastnut einrastbar ist und der Spannring sicher während der Fahrt in der Rastnut gehalten wird. Die auf diese Weise gebildeten Abdeckungsscheiben sind in einfacher Weise handhab- und montierbar. In der Mitte jeder Abdeckungsscheibe ist in bekannter Weise ein Aufsteckring angeordnet, mit dessen Hilfe die Abdeckungsscheibe auf die Nabe aufgesteckt wird und welcher an einem Nabenflansch zur Befestigung der Speichen anliegt.

Nach einer bevorzugten Ausführungsart der Erfindung ist die Rastnut als im Übergangsbereich zwischen Felgenflanke und Felgeninnenseite umlaufende, hinterschnittene Nut ausgebildet, in der die mit einem verdickten Rand ausgebildete Abdeckungsscheibe eingesprengt gehalten ist. Bei dieser sehr einfach zu montierenden Befestigungsart ist eine vollständig geschlossene Verbindung zwischen dem Rand der Abdeckungsscheibe und der außen glatt zu haltenden Felge erreicht.

Ordnet man dem verdickten Rand der Verkleidung einen plastischen Keder, vorzugsweise mit kreisförmigem oder schlauchförmigem Querschnitt an, so ist eine besonders einfache und elastische Verbindung zwischen Felge und Abdeckungsscheibe möglich, die das schnelle Abnehmen und Aufspannen der Abdeckungsscheibe ermöglicht.

Bei der Abdeckungsscheibe ist an ihrer Innenseite die Ausbildung eines umlaufenden Ringsteges möglich, mit dem die Abdeckungsscheibe dann in einer entsprechenden Nut der Felge festsetzbar ist.

Bei einer einfachen Ausführungsform der Erfindung sind die Rastnuten halbkreisförmig ausgebildet, wodurch die eingerastete Abdeckungsscheibe sicher gehaltert ist und gleichzeitig ein demontieren der Abdeckungsscheibe vereinfacht ist.

Da insbesondere das Hinterrad eines Fahrrades an seiner Nabe nicht symmetrisch aufgebaut ist, sondern auf einer Seite der Habe einen Zahnkranz für eine Kettenschaltung aufweist, ist es von Vorteil, wenn das Felgenprofil asymmetrisch zu einer vertikalen Mittellinie ausgebildet ist, wobei die auf Seiten des Zahnkranzes verlaufende Felgenflanke im wesentlichen parallel zur Mittellinie verläuft, während die gegenüberliegende Felgenflanke unter einem spitzen Neigungswinkel zur Mittellinie in Richtung zur Nabe nach außen geneigt ist. Auf diese Weise ist auf der Zahnkranzseite die Abdeckungsscheibe in einfacher Weise im wesentlichen vertikal anordbar, ohne die Kettenschaltung zu behindern. Gleichzeitig ist auf der anderen Seite des Hinterrades die Abdeckungsscheibe entsprechend geneigt anordbar.

In diesem Zusammenhang ist es insbesondere günstig, wenn die Felgenflanken wenigstens angenähert parallel zu einem durch die Speichen gebildeten Speichenkegel verlaufen.

Dabei ist es zur Ausrichtung der Abdeckungsscheiben weiterhin von Vorteil, wenn die der im wesentlichen vertikal verlaufenden Felgenflanke zugeordnete Rastnut mit ihrer Öffnung in Richtung Nabe weist, während die der geneigten Felgenflanke zugeordnete Rastnut unter einem spitzen Schwenkwinkel nach außen verschwenkt ist.

In diesem Zusammenhang ist es weiterhin von Vorteil, wenn Schwenkwinkel und Neigungswinkel im wesentlichen gleich sind. Auf diese Weise verläuft die Abdeckungsscheibe jeweils bis zur Nabe in Verlängerung der geneigten Felgenflanke, so daß keine Kanten oder Unebenheiten beim Übergang von Felgenprofil zur Abdeckungsscheibe auftreten.

Um die Speichen in einfacher Weise im Felgenprofil zwischen den Rastnuten in entsprechenden Speichenlöchern zu befestigen, wobei gleichzeitig ein bestimmter Neigungswinkel der Speichen ermöglicht wird, ist es von Vorteil, wenn die im Felgenprofil ausgebildeten Speichenlöcher gegenüber der Mittellinie zur geneigten Felgenflanke versetzt sind. Auf diese Weise sind insbesondere die der Seite der Nabe mit dem Zahnkranz zugeordneten Speichen in einfacher Weise unter einem geringen Neigungswinkel anordbar.

Bei einer bevorzugten Ausführungsform sind die Speichenlöcher auf der der geneigten Felgenflanke zugeordneten Seite der Mittellinie angeordnet. Dabei ist es weiterhin günstig, wenn die in dem der geneigten Felgenflanke näherliegenden Speichenloch angeordnete Speiche einen größeren spitzen Winkel mit einer zwischen den Speichenlöchern verlaufenden, vertikalen Speichenlochmittellinie ein, als die im anderen Speichenloch angeordnete Speiche. Die Speichenlochmittellinie ist dabei im wesentlichen parallel zur Mittellinie des Felgenprofils angeordnet und in Richtung zur geneigten Felgenflanke von dieser beabstandet.

Zur Stabilisierung eines aus einem Hohlprofil gebildeten Felgenprofils ist es bei der asymmetrischen Ausbildung des Hohlprofils insbesondere von Vorteil, wenn das Hohlprofil einen den Speichenlöchern relativ zur Mittellinie gegenüberliegendem, im wesentlichen vertikalen Verstärkungssteg aufweist.

Weiterhin ist von Vorteil, wenn die Bespannung um den Spannring gelegt ist und zum Aufspannen einen auf der Innenseite der Abdeckungsscheibe angeordneten Hohlsaum aufweist, wobei in diesem eine Spannschnur angeordnet ist. Auf diese Weise ist mittels der Spannschnur die Bespannung in einfacher Weise auf den Spannring aufspann- und abnehmbar. Ein Austausch der Bespannungen zur Verwendung eines anderen Bespannungsmaterials, einer anderen Bespannungsfarbe oder zur Reinigung der Bespannung ist in einfacher Weise möglich.

Je nach Bespannungsmaterial kann auch auf die Spannschnur verzichtet werden, wobei in diesem Fall das Aufspannen der Bespannung durch Wärmeschrumpfung erfolgen kann.

Bei einer weiteren Ausführungsform der Erfindung ist die Bespannung direkt mit dem Spannring verklebt. In diesem Fall ist der Ring beispielsweise als flacher Ring ausgebildet, wobei auf einer Flachseite des Rings die Bespannung aufgeklebt wird.

Als Bespannungsmaterial kann ein Gewebe, ein Film, ein Film mit hinterlegtem Gewebe, ein beschichtetes Gewebe oder dergl. verwendet werden. Die Auswahl des Bespannungsmaterials kann entsprechend der Witterung, der mechanischen Beanspruchung oder anderer Kriterien getroffen werden. Das Material des Spannrings ist vorzugsweise ein Metall oder ein Kompositwerkstoff. Aufgrund der Elastizität und des geringen Gewichtes sind auch Titanringe von Vorteil. Neben einem sehr elastischen Bespannungsmaterial ist auch eine Scheibe aus einem Kompositwerkstoff verwendbar, welche an ihrem Umfang das Spannringprofil aufweist, so daß in diesem Fall Spannring und Bespannung integriert ausgebildet sind.

Bei einer weiteren Ausführungsform der Erfindung ist eine Profilscheibe konzentrisch zur Nabe und auf der Innenseite der Abdeckungsscheibe angeordnet. Die Profilscheibe dient zur Profilgebung der Bespannung, wodurch eine Speichendurchdrückung durch die Bespannung verhindert ist.

Um beispielsweise die Zugänglichkeit des im Felgenprofil angeordneten Ventils zu erleichtern, ist es günstig, wenn im Bereich des Ventils in der Abdeckungsscheibe eine Zugangsöffnung ausgebildet ist. Durch die Zugangsöffnung ist das Ventil für eine Luftpumpe zugänglich.

Weiter ist von Vorteil, wenn in der Zugangsöffnung zumindest zum Spreizen des Spannrings eine Spreizvorrichtung angeordnet ist, wobei der Spannring eine Lücke aufweist und die Spreizvorrichtung mit die Lücke begrenzenden freien Enden des Spannrings bewegungsverbunden ist. Aufgrund dessen ist durch Betätigung der Spreizvorrichtung der Durchmesser des Spannrings veränderbar. Beim Einsetzen der Abdeckungsscheibe wird diese beispielsweise in die zugehörige Rastnut einfach eingesetzt und durch Spreizen des Spannrings fixiert. Beim Herausnehmen der Abdeckungsscheibe erfolgt der Vorgang entsprechend in umgekehrter Weise. Die Spreizvorrichtung ist dabei so ausgebildet, daß sie bei Betätigung die freien Enden des Spannrings im wesentlichen in Umfangsring auseinanderdrückt. Zum Herausnehmen der Abdeckungsscheibe muß die Spreizvorrichtung nur gelöst werden, so daß aufgrund der Elastizität des Spannrings die freien Enden sich aufeinander zubewegen.

Bei einer günstigen Ausführungsform der Spreizvorrichtung ist diese als in Umfangsrichtung des Spannrings wirkendes Federelement ausgebildet. Beim Einsetzen der Abdeckungsscheibe ist das Federelement manuell zusammendrückbar und sobald der Spannring in der Rastnut angeordnet ist, wird aufgrund der Federkraft der Spannring gespreizt und fixiert.

Eine weitere Ausführungsform der Spreizvorrichtung weist eine drehbare Exzenterscheibe auf, die auf die im wesentlichen in radialer Richtung nach innen gebogenen freien Enden des Spannrings einwirkt. Durch einfache Drehung der Exzenterscheibe sind die an diese anliegenden freien Enden spreizbar und damit der Spannring in der Rastnut fixierbar.

Bei einer weiteren vorteilhaften Ausführungsform sind die freien Enden im wesentlichen in radialer Richtung nach innen und voneinander weggebogen und die Spreizvorrichtung weist einen entlang der Enden verschiebbar gelagerten Spreizkeil auf. Die freien Enden weisten einen in Richtung des Mittelpunktes der Abdeckungsscheibe zunehmenden Abstand auf, so daß ein in Richtung des Felgenprofils bewegter Spreizkeil die freien Enden auseinanderdrückt. Durch Bewegung des Spreizkeils entlang der freien Enden ist so in einfacher Weise die Abdeckungsscheibe fixierbar oder lösbar.

Um in einfacher Weise die Zugangsöffnung zu bilden und die freien Enden der Spannringe zu halten und zu sichern, ist es günstig, wenn ein im wesentlichen U-förmiger, elastischer Rahmen als Begrenzung der Zugangsöffnung in der Abdeckungsscheibe angeordnet ist und die freien Enden des Spannrings in die U-Schenkel des Rahmens eingeschoben sind, wobei der Spreizkeil zwischen den U-Schenkeln verschiebbar gelagert ist. Durch die Verwendung des Rahmens ist die Bespannung in vorteilhafter Weise gegen eine Beschädigung oder ein Einreißen in der Zugangsöffnung gesichert. Durch die Festlegung der freien Enden in den U-Schenkeln sind diese nicht direkt mit der Bespannung in Verbindung, so daß eine Beschädigung der Bespannung durch die Enden unterbunden ist. Außerdem sind Verletzungen an den freien Enden auf diese Weise ausgeschlossen. Durch die Lagerung des Spreizkeils zwischen den U-Schenkeln ist ein Spreizen des Spannrings durch Verschieben des Spreizkeils in Richtung des Felgenprofils in einfacher Weise möglich.

In diesem Zusammenhang ist insbesondere von Vorteil, wenn der Spreizkeil und die U-Schenkel eine Nut-Feder-Verzahnung aufweisen. Beispielsweise kann der Speizkeil zwei seitliche Nuten aufweisen, die mit entsprechenden Vorsprüngen auf der Innenseite der U-Schenkel in Eingriff stehen. So ist der Spreizkeil insbesondere in seiner Spreizstellung, d.h., wenn er am Felgenprofil anliegt, sicher gehalten. Wird der Spreizkeil aus der Spreizstellung herausbewegt, ist er je nach Tiefe der Verzahnung auch aus dem Rahmen entnehmbar.

Um auf einfache Weise den Spreizkeil in seiner Spreizstellung zu sichern, ist es von Vorteil, wenn die U-Schenkel eine Einrastnase aufweisen. In diese Einrastnase rastet der Spreizkeil mit entsprechenden Vorsprüngen ein. Aufgrund der Elastizität des Rahmens ist der Spreizkeil in seiner Spreizstellung sicher fixiert.

Um die Zugangsöffnung in einfacher Weise vollständig verschließbar zu gestalten, ist es günstig, wenn eine Verschlußklappe an dem dem Felgenprofil gegenüberliegenden Ende des Spreizkeils verschwenkbar gelagert ist. Ist der Spreizkeil in seiner Spreizstellung, verschließen Verschlußklappe und Spreizkeil die Zugangsöffnung vollständig.

Dabei ist es weiterhin von Vorteil, wenn die Verschlußklappe und der Spreizkeil formschlüssig in der Abdeckungsscheibe angeordnet sind. Auf diese Weise werden keine aerodynamisch nachteiligen Kanten gebildet.

Um eine einfache Befestigung der Verschlußklappe zu gewährleisten, weist diese zur Verrastung mit dem U-Steg des Rahmens eine Schnappnase auf. Diese hintergreift den U-Steg und sichert die Verschlußklappe.

Um eine einfache Handhabe für die Verschlußklappe zu erhalten, ist es günstig, wenn in der Verschlußklappe ein Fingerloch ausgebildet ist. Durch einfaches Einstecken beispielsweise eines Fingers ist die Verschlußklappe nach außen verschwenkbar und darauffolgend kann insbesondere auch unterZuhilfenahme der Verschlußklappe der Spreizkeil aus seiner Spreizstellung gezogen werden.

Da zur Bildung der kreisförmigen Felge das Felgenprofil an einer Stelle durch eine Steckverbindung verbunden ist, ergibt sich an dieser Stelle eine lokal erhöhte Masse der Felge. Dies führt zu einer Unwucht. Um dieser Unwucht wenigstens teilweise zu begegnen, ist es von Vorteil, wenn die Zugangsöffnung diametral gegenüberliegend zum Felgenstoß des Felgenprofils angeordnet ist.

Dabei ist es weiterhin günstig, wenn das Gewicht von U-Rahmen, Spreizkeil, Verschlußklappe und Ventil im wesentlichen identisch mit der Unwucht am Felgenstoß ist. Auf diese Weise ist ein zusätzliches Auswuchten des Laufrades nicht mehr notwendig.

Um auch bei geschlossenem Spannring diesen in einfacher Weise aus der Rastnut entnehmen zu können, weist bei einer vorteilhaften Ausführungsform der Spannring an wenigstens einer Stelle eine von der Rastnut fortweisende Eingriffsdelle auf. Diese ist zum Heraushebeln des Spannrings verwendbar.

Um das Heraushebeln des Spannrings zu erleichtern, ist es weiterhin günstig, wenn zwischen Rastnut und Spannring stellenweise elastische Abstützelemente angeordnet sind. Auf diese Weise kann der Spannring einer radial nach innen wirkenden Aushebelkraft radial nach außen ausweichen und das Lösen der Abdeckungsscheibe ist erleichtert.

Um ein automatisches Verschließen der Verschlußklappe zu ermöglichen, ist es günstig, wenn zwischen Verschlußklappe und Spreizkeil ein Federelement zur Kraftbeaufschlagung der Verschlußklappe in Schließrichtung angeordnet ist. Aufgrund des Federelementes ist die Verschlußklappe selbstschließend, so daß die Sicherheit beim Anfahren erhöht ist. Ein Anfahren mit offener Verschlußklappe ist auf diese Weise ausgeschlossen.

Um die Krafteinleitung ins Laufrad zu verbessern und Spannungsspitzen abzuschwächen, ist bei einer bevorzugten Ausführungsform des erfindungsgemäßen Laufrades das Felgenprofil am Felgenstoß durch eine Schäftung verbunden. Die Verbindung des Felgenprofils durch diese Schäftung ist nicht auf die dargestellten Felgenprofile beschränkt. Eine solche Schäftung ist bei jedem Felgenprofil anwendbar, wie zum Beispiel bei Alufelgen, Nirosta-Felgen, Felgen mit Hohlkammerprofil, Felgen mit konkavem Profil oder dergleichen.

Um insbesondere die radiale Elastizität des Laufrades und den Griff der Bremsen nicht negativ zu beeinflussen, ist es in diesem Zusammenhang weiter von Vorteil, wenn eine Felgenstoßebene, entlang welcher die Schäftung erfolgt, durch das Felgenprofil zwischen den Felgenflanken verläuft, wobei deren Flächennormale unter einem spitzen Winkel zur Umfangsrichtung angeordnet ist. Die Felgenstoßebene verläuft dabei im wesentlichen senkrecht zur Oberseite bzw. Unterseite des Felgenprofils.

Zur weiteren Stabilisierung ist es in diesem Zusammenhang günstig, wenn im Bereich des Felgenstoßes wenigstens eine Innenhülse in der Hohlkammer angeordnet ist, welche sich im wesentlichen auf beiden Seiten des Felgenstoßes in Umfangsrichtung gleich weit erstreckt.

Weiterhin von Vorteil ist, wenn Stirnseiten der Innenhülse parallel zur Felgenstoßebene verlaufen. Auf diese Weise wird im Bereich des Felgenstoßes eine gleichmäßige Spannungsspitzenaufteilung auf Felgenstoß und Innenhülse erreicht.

Bei einem Felgenprofil mit geteilter Hohlkammer ist es insbesondere günstig, wenn jeweils eine Innenhülse in einer der durch den Verstärkungssteg getrennten Teilkammer der Hohlkammer angeordnet ist.

Um insbesondere das Naßbremsverhalten des Laufrades zu verbessern, erweist es sich als günstig, wenn auf den Felgenflanken eine feinkörnige Keramikschicht aufgespritzt ist. Eine solche Keramikschicht ist bei jedem bekannten Laufrad für Fahrräder aufspritzbar. Das Aufspritzen erfolgt beispielsweise durch Plasmaschichtabscheidung.

Da die Keramikschicht und das Felgenprofil unterschiedliches Elastizitätsverhalten aufweisen, kann es zu einem Abplatzen der Keramikschicht kommen. Um dies weitestgehend zu verhindern, ist es von Vorteil, wenn die Keramikschicht eine konzentrisch zur Nabe verlaufende Spannungsfuge aufweist. Im allgemeinen ist die Spannungsfuge in etwa mittig zur Höhe der Felgenflanke angeordnet. Ihre Höhe in radialer Richtung beträgt zwischen 0,3 und 0,8 mm.

Die erfindungsgemäß vorgeschlagenen Lösungen und vorteilhafte Ausführungsbeispiele davon werden im folgenden anhand der in der Zeichnung dargestellten Figuren weiter erläutert und beschrieben.

Es zeigen:
- Figur 1: eine Seitenansicht eines hinteren Laufrades eines Fahrrades;
- Figur 2: eine Schnittansicht entlang der Linie II-II aus Figur 1;
- Figur 3: eine vergrößerte Ansicht des Details III aus Figur 2;
- Figur 4: eine Seitenansicht einer weiteren Ausführungsform des erfindungsgemäßen Laufrades mit einer Zugangsöffnung;
- Figur 5: einen Schnitt entlang der Linie V-V aus Figur 4;
- Figur 6: einen Schnitt entlang der Linie VI-VI aus Figur 4;
- Figur 7: eine weitere Ausführungsform einer Spreizvorrichtung des erfindungsgemäßen Laufrades;
- Figur 8: eine Seitenansicht einer weiteren Ausführungsform des erfindungsgemäßen Laufrades;
- Figur 9: einen Schnitt entlang der Linie IX-IX aus Figur 8;
- Figur 10: eine Darstellung einer weiteren Ausführungsform der Erfindung entsprechend zur Figur 3; und
- Figur 11: eine Draufsicht auf ein vereinfacht dargestelltes Felgenprofil von oben.

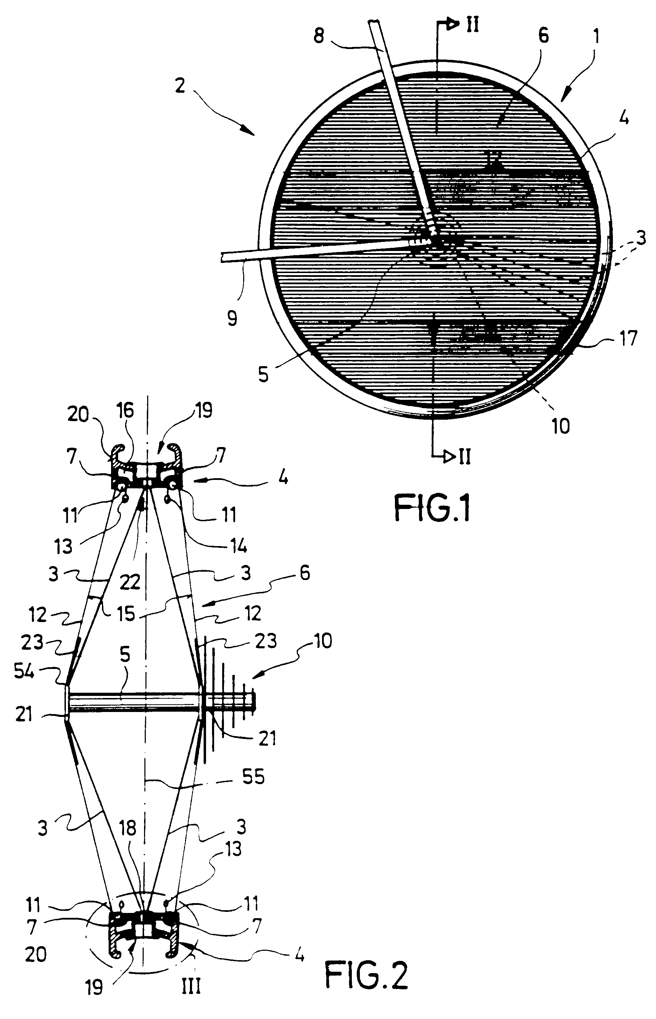

In Figur 1 ist eine teilweise Seitenansicht eines Fahrrades 2 dargestellt. Ein hinteres Laufrad 1 ist an Hinterradgabeln 8 und 9 mittels seiner Nabe 5 drehbar gelagert. Die Hinterradgabel 8 führt zum nicht dargestellten Sattel des Fahrrades, während die HInterradgabel 9 zu dem ebenfalls nicht dargestellten Tretlager des Fahrrades führt.

Zwischen Nabe 5 und einem umlaufenden Felgenprofil 4 sind eine Vielzahl von Speichen 3 angeordnet. Zur Vereinfachung sind in Figur 1 nur einige der Speichen 3 dargestellt. Die Nabe 5 ist im Mittelpunkt des kreisförmig gebogenen Felgenprofils 4 angeordnet. Auf der nach außen weisenden Seite des Felgenprofils 4 ist ein Reifen 17 angeordnet.

Konzentrisch zur Nabe 5 sind mehrere Zahnkränze für eine Kettenschaltung des Fahrrades angeordnet. Zur seitlichen Abdeckung des Laufrades ist zwischen Nabe 5 und dem Felgenprofil 4 eine Abdeckungsscheibe 6 mit einer Bespannung 12 angeordnet.

In Figur 2 ist ein Schnitt des Laufrades 1 aus Figur 1 entlang der Linie II-II dargestellt. Der in Figur 1 im Felgenprofil 4 angeordnete Reifen 17 in Figur 2 zur Vereinfachung weggelassen worden.

Auf beiden Seiten des Laufrades sind zwischen Nabe 5 und Felgenprofil 4 Abdeckungsscheiben 6 angeordnete. Entlang ihres Umfangs sind die Abdeckungsscheiben mittels eines Spannrings 11 in seitlich im Felgenprofil 4 ausgebildeten Rastnuten 7 verrastet. Diese sind jeweils direkt benachbart zur Felgenflanke 20 auf der Felgeninnenseite 22 angeordnet. Die Abdeckungsscheibe weist zur Verkleidung eine Bespannung 12 auf, die sich von einem Nabenring 54 zur Lagerung der Abdeckungsscheibe an der Nabe 5 bis zum Spannring 11 erstreckt, um diesen in der Rastnut 7 herumgeführt ist und in einem Hohlsaum 13 mit eingelegter Spannschnur 14 endet. Konzentrisch zum Nabenring 54 sind auf der Innenseite 15 der Abdeckungsscheiben 6 Profilscheiben 23 angeordnet. Diese weisen einen gegenüber dem Durchmesser des Nabenrings 54 größeren Durchmesser auf und halten die Bespannung 12 auf Abstand zu den Speichen 3.

Die Speichen 3 verlaufen zwischen einem Nabenflansch 21 und einem mittig im Felgenprofil 4 angeordneten Speichenloch 18. Zur Befestigung sind die Speichen 3 in bekannter Weise in den Nabenflansch 21 einhakbar und mittels einer Spannmutter im Speichenloch 18 einspannbar. Gegenüber der Bespannung 12 der Abdeckungsscheibe 6 verlaufen die Speichen 3 ausgehend von der Nabe 5 stärker in Richtung der Vertikalen 55 geneigt. Auf diese Weise sind alle Speichen 3 innerhalb der beiden seitlichen Abdeckungsscheiben 6 angeordnet.

Auf der der Innenseite 22 des Felgenprofils 4 gegenüberliegenden Seite weist dieses eine Felgenmulde 19 zur Aufnahme eines Reifens auf. Felgenmulde 19 und Innenseite 22 sind durch eine Hohlkammer 16 voneinander beabstandet. Nur im Bereich der Speicherlöcher 18 sind Felgenmulde 19 und Innenseite 22 über eine Durchführungsöffnung zur Befestigung der Speichen 3 in ihren Speichenlöchern 18 miteinander verbunden. Auf einer Seite des Laufrades 1 sind auf der über die Abdeckungsscheibe 6 nach außen vorstehenden Nabe 5 mehrere Zahnkränze 10 aufgesteckt. Auf der Zahnkranzseite verlaufen sowohl Speichen 3 als auch Abdeckungsscheibe 6 mit einer geringeren Neigung in Richtung zur Vertikalen 55 als auf der der Zahnkranzseite gegenüberliegenden Seite des Laufrades 1.

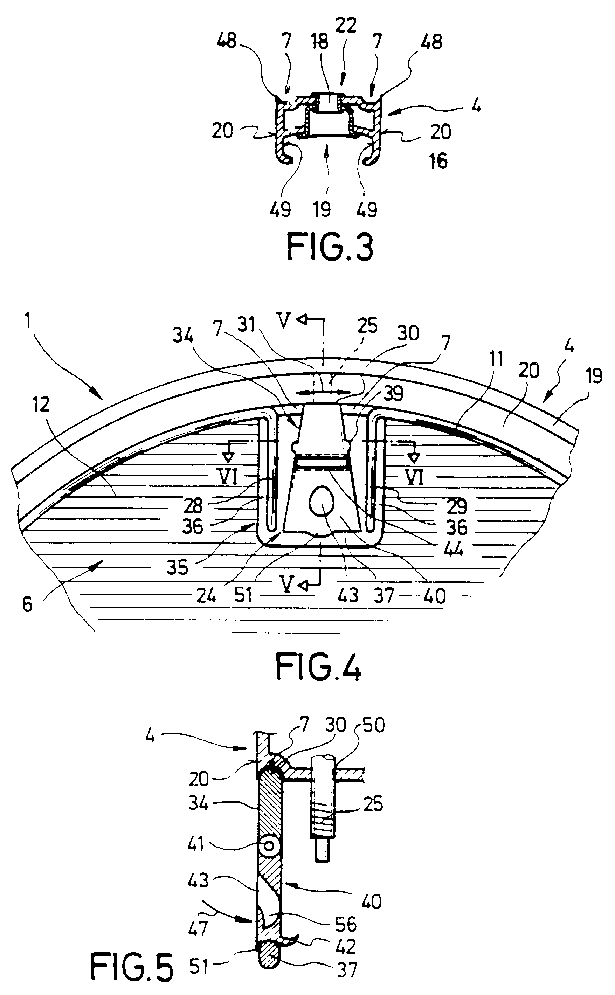

In Figur 3 ist das Detail III aus Figur 2 vergrößert dargestellt. Zur Vereinfachung der Darstellung sind sowohl Speichen 3 als auch Abdeckungsscheiben 6 aus Figur 2 weggelassen worden.

Das Felgenprofil 4 weist zwei voneinander beabstandete Felgenflanken 20 auf, die in etwa vertikal verlaufen. An ihrem der Innenseite 22 des Felgenprofils 4 zugehörigen Ende weisen die Felgenflanken 20 eine die Rastnuten 7 begrenzende Rastkante 48 auf. Die Rastnuten 7 sind im wesentlichen halbkreisförmig und im Randbereich der Innenseite 22 angeordnet. Mittig zwischen den Felgenflanken 20 und den Rastnuten 7 ist ein Speichenloch 18 angeordnet. Dieses weist eine Verbindung zu der der Innenseite 22 gegenüberliegenden Felgenmulde 19 des Felgenprofils 4 auf. Zwischen Innenseite 22 und Felgenmulde 19 ist eine Hohlkammer 16 angeordnet. Zur seitlichen Begrenzung der Felgenmulde 19 dienen die Felgenflanken 20, die mit ihren Enden aufeinander zugekrümmt sind. Zwischen den aufeinander zugekrümmten Enden sind Aufnahmen 49 für in Drahtreifen eingelegte, umlaufende Drähte gebildet.

In Figur 4 ist das Laufrad 1 mit seinem Felgenprofil 4 und einer Abdeckungsscheibe 6 dargestellt. An einer Stelle ist in der Felgenmulde 19 ein Ventil 25 angeordnet. Dieses steht auf der Innenseite des Felgenprofils 4 hervor und ist durch eine Zugangsöffnung 24 zugänglich.

In der umlaufenden Rastnut 7 ist der Spannring 11 angeordnet und teilweise in dieser versenkt. Benachbart zum Ventil 25 weist der Spannring 11 eine Lücke auf, so daß die Rastnut 7 sichtbar ist. Die die Lücke begrenzenden freien Enden 28 und 29 des Spannrings 11 sind zum Laufradmittelpunkt umgebogen und in etwa parallel zueinander ausgerichtet.

Zur Begrenzung der Zugangsöffnung 24 und zur Aufnahme der freien Enden 28 und 29 ist in der Bespannung 12 der Abdeckungsscheibe 6 ein im wesentlichen U-förmiger Rahmen 35 angeordnet. Dieser weist mit seinen U-Schenkeln 36 in Richtung des Felgenprofils 4, wobei sein U-Steg 37 in etwa rechtwinkelig zu den freien Enden 28 und 29 ausgerichtet ist. U-Schenkel 36 und freie Enden 28 und 29 sind im wesentlichen gleich lang, wobei die freien Enden 28 und 29 in entsprechende Öffnungen der U-Schenkel 36 eingesteckt sind.

Die U-Schenkel 36 sind in Richtung des Felgenprofils 4 mit zunehmender Dicke ausgebildet, wobei ihre Außenseiten im wesentlichen vertikal verlaufen, während ihre Innenseiten in Richtung des Felgenprofils 4 aufeinander zulaufen.

Auf den sich gegenüberliegenden Innenseiten der U-Schenkel 36 ist ein Spreizkeil 34 verschiebbar gelagert. Dieser weist eine in Richtung zum Felgenprofil 4 abnehmende Breite auf. Durch Verschieben des Spreizkeils 34 radial nach außen relativ zum Laufrad 1 sind die U-Schenkel 36 und damit die freien Enden 28 und 29 des Spannrings 11 in Umfangsrichtung 31 spreizbar. Ist der Spreizkeil 34 mit seinem in Richtung Felgenprofil 4 weisenden Ende 30 mit der Rastnut 7 in Anlage, ist er in seiner Spreizposition angeordnet. Zur Fixierung dieser Position sind auf der Innenseite der U-Schenkel 36 Einrastnasen 39 ausgebildet, die mit entsprechenden Vorsprüngen des Spreizkeils 34 verrasten.

Zwischen Spreizkeil 34 und U-Steg 37 ist eine Verschlußklappe 40 angeordnet, die die Zugangsöffnung 24 zusammen mit dem Spreizkeil 34 vollständig abdeckt. Zur Verbindung von Verschlußklappe 40 und Spreizkeil 34 sind diese mittels eines Bolzens miteinander verbunden, so daß die Verschlußklappe 40 verschwenkbar am Spreizkeil 34 gelagert ist. Koaxial zum Bolzen ist ein Federelement 44 angeordnet, das die Verschlußklappe 40 in Richtung des U-Stegs 37 kraftbeaufschlagt.

Die Verschlußklappe 40 weist zu ihrer Handhabung ein Fingerloch 43 auf, das in etwa mittig zu ihr angeordnet ist. Zur Anlage am U-Steg 37 steht ein Anlagevorsprung 51 von der Verschlußklappe 40 ab.

In Figur 5 ist ein Schnitt entlang der Linie V-V aus Figur 4 dargestellt.

Im Felgenprofil 4 ist in einer Ventilöffnung 50 das Ventil 25 angeordnet. Ähnlich wie die Speichenlöcher aus Figur 3 ist die Ventilöffnung 50 mittig im Felgenprofil 4 angeordnet.

Formschlüssig mit der Felgenflanke 20 sind die nach außen weisenden Oberflächen des Spreizkeils 34 und der Verschlußklappe 40 angeordnet. In der Rastnut 7 ist das Ende 30 des Spreizkeils 34 eingeschoben. Zwischen Verschlußklappe 40 und Spreizkeil 34 ist der Lagerbolzen 41 angeordnet.

In der in Figur 5 dargestellten Spreizposition des Spreizkeils 34 ist die Verschlußklappe 40 in ihrer Schließstellung dargestellt. Der Anlagevorsprung 51 liegt von einer Seite an dem U-Steg 37 an, während dieser von der anderen Seite von einer von der Verschlußklappe abstehenden Schnappnase 42 hintergriffen wird. Durch das in Figur 4 dargestellte Federelement 44 ist die Verschlußklappe 40 in Schließrichtung 47 kraftbeaufschlagt.

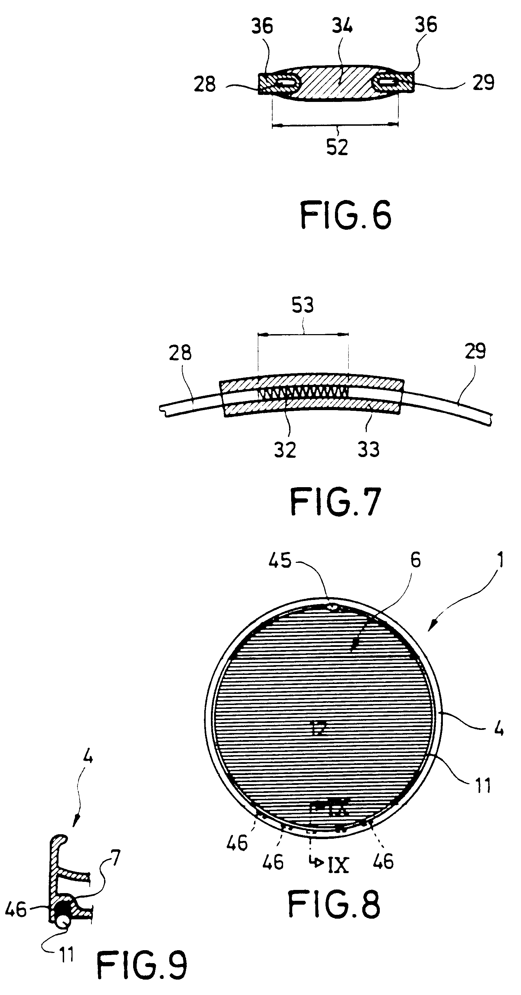

In etwa mittig zwischen Anlagevorsprung 51 und Lagerbolzen 41 ist auf der Außenseite der Verschlußklappe 40 das Fingerloch 43 angeordnet. Dieses stellt die Verbindung zu einer in der Verschlußklappe 40 und in Richtung zum U-Steg 37 weisenden Fingeraufnahme 56 her. In Figur 6 ist ein Schnitt entlang der Linie VI-VI aus Figur 4 dargestellt.

Der Spreizkeil 34 ist im wesentlichen flach oval geformt und weist eine Breite 52 auf. An seinen seitlichen Enden sind Nuten zur Aufnahme der U-Schenkel 36 eingelassen. Innerhalb der U-Schenkel 36 sind die freien Enden 28 und 29 des Spannrings eingeschoben. Diese weisen ein flaches, ovales Profil auf, so daß sie innerhalb der U-Schenkel 36 nicht verdrehbar sind.

Die Breite 52 des Spreizkeils 34 ist geringer als die Breite der Zugangsöffnung 24 in Höhe des Fingerlochs 43, siehe Figur 4. Daher ist der Spreizkeil 34 bei ausreichend weiter Verschiebung in Richtung des U-Steges 37 zusammen mit der Verschlußklappe 40 aus der Zugangsöffnung 24 entnehmbar.

In Figur 7 ist ein weiteres Ausführungsbeispiel einer Spreizvorrichtung dargestellt. Die freien Enden 28 und 29 des Spannrings 11 begrenzen eine Lücke der Breite 53 und sind aufeinander zugerichtet. Zwischen den freien Enden ist mittels einer Federhülse 33 ein Federelement 32 angeordnet. Die freien Enden 28 und 29 sind teilweise in die Federhülse 33 eingeschoben und relativ zu dieser verschiebbar.

In Figur 8 ist ein weiteres Ausführungsbeispiel des erfindungsgemäßen Laufrades 1 dargestellt. In der Rastnut des Felgenprofils 4 ist der mit der Bespannung 12 bespannte Spannring 11 eingesetzt. Auf diese Weise ist durch die Abdeckungsscheibe 6 das Laufrad 1 seitlich verkleidet. An einer Stelle seines Umfangs weist der Spannring 11 eine Eingriffsdelle 45 auf. Diese ist durch einen zur Innenseite des Spannrings 11 gebogenen Abschnitt des Spannrings gebildet.

In der Rastnut sind bei einer weiteren Ausführungsform der Erfindung eine Anzahl von elastischen Abstützelementen 46 beabstandet voneinander anordbar.

In Figur 9 ist zur Verdeutlichung der Abstützelemente ein Schnitt entlang der Linie IX-IX aus Figur 8 dargestellt.

Im Felgenprofil 4 ist ein Abstützelement 46 in der Rastnut 7 angeordnet, wobei es den Spannring 11 elastisch abstützt.

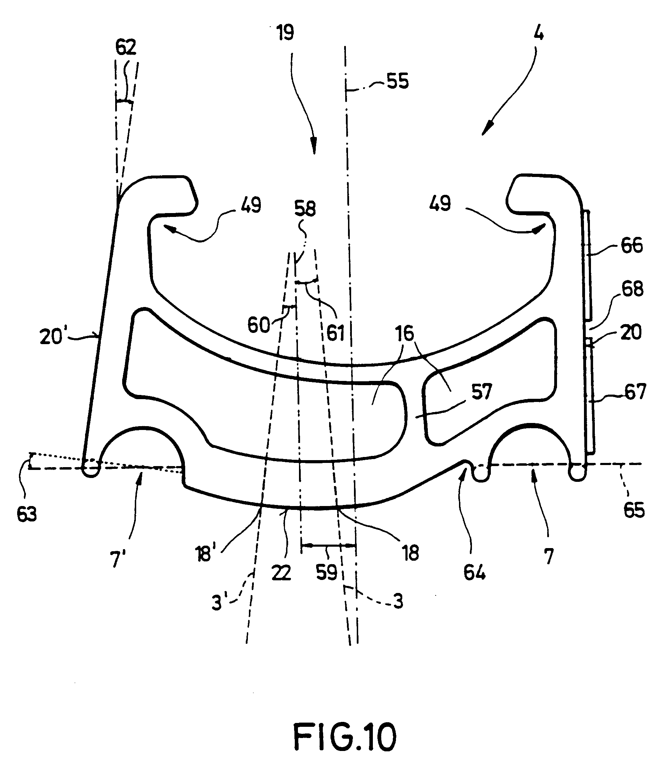

In Figur 10 ist eine weitere Ausführungsform eines erfindungsgemäßen Felgenprofils des Laufrades entsprechen der Darstellung der Figur 3 dargestellt.

Das Felgenprofil 4 weist auf seiner Außenseite die Felgenmulde 19 zur Aufnahme eines nicht dargestellten Reifens auf. Der Reifen ist entsprechend zur Beschreibung der Figur 3 zwischen den aufeinanderzu gekrümmten Enden der Felgenflanken 20 und 20' in den Aufnahmen 49 eingelegt.

Mittig zwischen den oberen Enden der Felgenflanken beziehungsweise der Aufnahme 49 verläuft die vertikale Mittellinie 55. Während die auf der rechten Seite der Figur 10 dargestellten Felgenflanke 20 im wesentlichen parallel zur Mittellinie 55 verläuft, schließt die geneigte Felgenflanke 20' einen spitzen Winkel 63 mit der Mittellinie 55 ein. Die Felgenflanke 20' verläuft in Richtung zur der beispielsweise in Figur 2 dargestellten Nabe 5 nach außen. Auf seiten der im wesentlichen vertikalen Felgenflanke 20 sind auf der in Figur 2 dargestellten Nabe 5 die Zahnkränze 10 einer Kettenschaltung angeordnet.

Insgesamt ist das Felgenprofil 4 asymmetrisch zur Mittellinie 55 ausgebildet. Die Rastnut 7 auf der rechten Seite der Mittellinie 55 ist im wesentlichen halbkreisförmig ausgebildet, wobei der zugehörige Kreismittelpunkt und ein den Halbkreis begrenzender Durchmesser auf einer Horizontalen 65 angeordnet sind. Die auf der linken Seite der Mittellinie 55 angeordnete Rastnut 7' ist ebenfalls im wesentlichen halbkreisförmig ausgebildet, wobei ihr Kreismittelpunkt und ein den Halbkreis begrenzender Durchmesser auf einer unter einem Winkel 63 gegenüber der Horizontalen 65 nach oben verschwenken Geraden angeordnet sind. Der Kreismittelpunkt der Rastnut 7' liegt auf dem Schnittpunkt der Horizontalen 65 und der um den Winkel 62 verschwenkten Geraden. Beide Rastnuten 7 und 7' sind über den vorstehend erwähnten Durchmesser verlängert, wobei diese Verlängerungen im wesentlichen tangential zu den Rastnuten an den jeweiligen Enden der Durchmesser verlaufen und über eine entsprechende Krümmung in die Felgenflanken 20 beziehungsweise 20' und die Felgeninnenseite 22 übergehen.

Zwischen Rastnuten 7, 7' und Felgeninnenseite 22 sowie der Felgenmulde 19 ist die Hohlkammer 16 angeordnet. Diese ist auf Seiten der Rastnut 7, rechts von der Mittellinie 55 durch einen im wesentlichen vertikal verlaufenden Verstärkungssteg 57 geteilt. Eine folglich gebildete, kleinere Hohlkammer ist im wesentlichen oberhalb der Rastnut 7 und eine größere Hohlkammer oberhalb der Rastnut 7' und oberhalb der Felgeninnenseite 22 angeordnet. Im Bereich der größeren Hohlkammer ist das Felgenprofil 4 auf seiner Innenseite 22 mit einer größeren Wandstärke als im Bereich der kleineren Hohlkammer ausgebildet. Der Übergang zwischen den beiden mit unterschiedlicher Wandstärke ausgebildeten Bereichen erfolgt unterhalb des Verstärkungsstegs 57. Direkt benachbart zur Rastnut 7 ist au der Felgeninnenseite 22 eine Mulde 64 zur Materialersparnis ausgebildet.

In Richtung zur Rastnut 7' relativ zur Mittellinie 55 versetzt, sind im Felgenprofil 4 Speichenlöcher 18 und 18' ausgebildet. Diese sind in üblicherweise in Richtung des Umfangs des Felgenprofils 4 hintereinander angeordnet. Im Speichenloch 18 ist eine Speiche 3 befestigbar, die unter einem spitzen Winkel 61 gegenüber einer Speichenlochmittellinie 58 nach unten und außen verläuft. Im Speichenloch 18' ist eine Speiche 3' befestigbar, die unter einem spitzen Winkel 60 gegenüber der Speichenlochmittellinie 58 nach unten und nach außen verläuft. Speichen 3 und 3' verlaufen in Richtung der in Figur 2 dargestellten Nabe 5 auseinander, wobei sie in üblicher Weise an dem Nabenflansch 21 einhängbar sind.

Die Speichenlochmittellinie 58 verläuft parallel zur Mittellinie 55 und ist relativ zu dieser in einem Abstand 59 versetzt zur geneigten Felgenflanke 20' angeordnet. Der zwischen Speiche 3' und Speichenlochmittellinie 58 eingeschlossene spitze Winkel 60 ist geringfügig größer als die spitzen Winkel 62 und 63, die gleich groß sind. Die Größe der Winkel ist unter anderem abhängig von dem Durchmesser des Laufrades und dem Abstand 59 von Speichenlochmittellinie 58 und Mittellinie 55. In dem in Figur 10 dargestellten Ausführungsbeispiel ist der Winkel 60 im wesentlichen doppelt so groß wie der Winkel 61.

Auf der Felgenflanke 20 ist eine Keramikbeschichtung 66 und 67 dargestellt, die auf der Oberfläche der Felgenflanke aufgebracht ist. Die Keramikschicht ist in Richtung der Mittellinie 55 zweigeteilt und durch eine Spannungsfuge 68 unterbrochen. Die Spannungsfuge ist im wesentlichen mittig zur Felgenflanke 20 angeordnet, wobei die Keramikbeschichtungen 66 und 67 sich in Richtung der Mittellinie 55 über eine gleiche Höhe erstrecken. Der Abstand der Keramikschichten 66 und 67 bzw. die Höhe der Spannungsfuge 68 beträgt zwischen 0,3 und 0,8 mm.

Zur Vereinfachung ist eine entsprechende Keramikbeschichtung auf der gegenüberliegenden Felgenflanke 20' weggelassen worden.

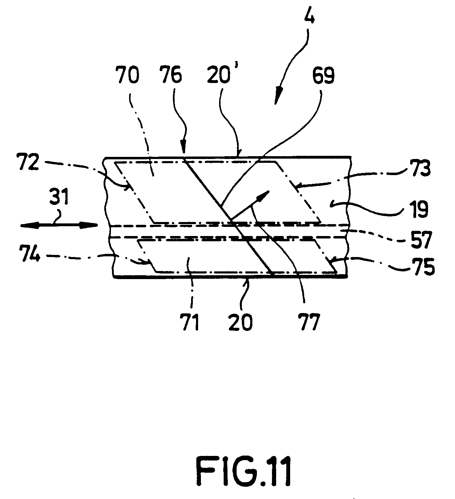

In Figur 11 ist eine vereinfachte Draufsicht auf ein Felgenprofil 4 gemäß Figur 10 von oben in Richtung der Oberseite 19 des Felgenprofils dargestellt. Figur 11 dient zur Darstellung einer Verbindung des Felgenprofils 4 am Felgenstoß 76. Dieser ist durch eine Felgenstoßebene 69 als Schnittebene des Felgenprofils 4 gebildet. Die Felgenstoßebene 69 erstreckt sich zwischen den beiden Felgenflanken 20 und 20', wobei ihre Flächennormale 77 einen spitzen Winkel mit der Umfangsrichtung 31 einschließt. Die Felgenstoßebene 69 verläuft im wesentlichen senkrecht zwischen der Oberseite 19 des Felgenprofils 4 und der in Figur 10 dargestellten Unterseite 22.

In der Hohlkammer 16, siehe Figur 10, bzw. in den durch den Verstärkungssteg 57 voneinander getrennten Teilkammern dieser Hohlkammer sind Innenhülsen 70 bzw. 71 eingeschoben. Diese können eine zu den Teilkammern komplementäre Form aufweisen, so daß sie durch Einpressen in den Teilkammern befestigbar sind. Die Stirnseiten 72 und 73 bzw. 74 und 75 der Innenhülsen 70 bzw. 71 verlaufen parallel zur Felgenstoßebene 69. Aufgrunddessen weisen die Innenhülsen 70 und 71 einen parallelogrammförmigen Querschnitt auf. Die längeren Parallelogrammseiten verlaufen jeweils entlang der Felgenflanken 20 bzw. 20' und entlang des Verstärkungssteges 57. Die kürzeren Parallelogrammseiten, d. h. die Stirnseiten, sind jeweils in etwa im gleichen Abstand zur Felgenstoßebene 69 angeordnet.

Bei einem Felgenprofil 4 ohne Verstärkungssteg 57, d.h. mit einer einteiligen Hohlkammer 16, ist die Innenhülse in der Regel einteilig ausgebildet.

## Patentansprüche

1. Laufrad (1) für ein Fahrrad (2) mit einer Vielzahl von zwischen einem umlaufenden Felgenprofil (4) und einer Nabe (5) angeordneten Speichen (3), wobei wenigstens eine Abdeckungsscheibe (6) zur seitlichen Verkleidung des Laufrades (1) an diesem lösbar befestigt ist, dadurch **gekennzeichnet**, daß im Felgenprofil (4) seitlich wenigstens eine umlaufende Rastnut (7) ausgebildet ist, in welche die Abdeckungsscheibe (6) einrastbar ist.

2. Laufrad nach Anspruch 1,
dadurch **gekennzeichnet**,
daß die Abdeckungsscheibe (6) aus einem im wesentlichen kreisförmigen Spannring (11) und einer auf diesem aufgespannten Bespannung (12) gebildet ist.

3. Laufrad nach Anspruch 1,
dadurch **gekennzeichnet**,
daß die Rastnut (7) als im Übergangsbereich zwischen Felgenflanke (20) und Felgeninnenseite (22) umlaufende Nut (7) ausgebildet ist, in der die mit einem verdickten Rand (11) ausgebildete Abdeckungsscheibe (6) eingesprengt gehalten ist.

4. Laufrad nach Anspruch 3,
dadurch **gekennzeichnet**,
daß im verdickten Rand (11) ein elastischer Keder vorzugsweise mit kreisförmigem Querschnitt angeordnet ist.

5. Laufrad nach Anspruch 4,
dadurch **gekennzeichnet**,
daß der Keder schlauchförmig ist.

6. Laufrad nach Anspruch 3,
dadurch **gekennzeichnet**,
daß die Nuten (7) im Querschnitt im wesentlichen kreisförmig ausgebildet sind.

7. Laufrad nach Anspruch 1,
dadurch **gekennzeichnet**,
daß die Abdeckungsscheibe (6) mit einem umlaufenden Ringsteg (11) auf ihrer Innenseite ausgebildet ist, mit dem die Abdeckungsscheibe (6) in der Rastnut (7) festsetzbar ist.

8. Laufrad nach wenigstens einem der vorangehenden Ansprüche,
dadurch **gekennzeichnet**,
daß die Rastnuten (7, 7') halbkreisförmig ausgebildet sind.

9. Laufrad nach wenigstens einem der vorangehenden Ansprüche,
dadurch **gekennzeichnet**,
daß das Felgenprofil (4) asymmetrisch zu einer vertikalen Mittellinie (55) ausgebildet ist, wobei die auf Seiten eines Zahnkranzes (10) einer Kettenschaltung verlaufende Felgenflanke (20) im wesentlichen parallel zur Mittellinie (55) verläuft, während die gegenüberliegende Felgenflanke (20') unter einem spitzen Neigungswinkel (62) zur Mittellinie in Richtung zur Nabe (5) nach außen geneigt ist.

10. Laufrad nach wenigstens einem der vorangehenden Ansprüche,
dadurch **gekennzeichnet**,
daß die der geneigten Felgenflanke (20') zugeordnete Rastnut (7') gegenüber der der anderen Felgenflanke (20) zugeordneten Rastnut (7) um einen spitzen Schwenkwinkel (63) nach außen verschwenkt ist.

11. Laufrad nach wenigstens einem der vorangehenden Ansprüche,
dadurch **gekennzeichnet**,
daß Schwenkwinkel (63) und Neigungswinkel (62) im wesentlichen gleich sind.

12. Laufrad nach wenigstens einem der vorangehenden Ansprüche, dadurch **gekennzeichnet**,
daß im Felgenprofil (4) ausgebildete Speichenlöcher (18, 18') zur Anordnung der Speichen (3, 3') gegenüber der Mittellinie (55) zur geneigten Felgenflanke (20') versetzt sind.

13. Laufrad nach wenigstens einem der vorangehenden Ansprüche,
dadurch **gekennzeichnet**,
daß die Speichenlöcher (18, 18') auf der der geneigten Felgenflanke (20') zugeordneten Seite des Felgenprofils (4) relativ zur Mittellinie (55) angeordnet sind.

14. Laufrad nach wenigstens einem der vorangehenden Ansprüche,
dadurch **gekennzeichnet**,
daß die in dem der geneigten Felgenflanke (20') näherliegenden Speichenloch (18') angeordnete Speiche (3') einen größeren spitzen Winkel mit einer zwischen den Speichenlöchern (18, 18') verlaufenden, vertikalen Speichenlochmittellinie (58) einschließt als die in dem anderen Speichenloch (18) angeordnete Speiche (3).

15. Laufrad nach wenigstens einem der vorangehenden Ansprüche
mit einem aus einem Hohlprofil gebildeten Felgenprofil,
dadurch **gekennzeichnet**,
daß das Hohlprofil (4) ein den Speichenlöchern (18, 18') relativ zur Mittellinie gegenüberliegenden, im wesentlichen vertikalen Verstärkungssteg (57) aufweist.

16. Laufrad nach Anspruch 2,
dadurch **gekennzeichnet**,
daß die Bespannung (12) um den Spannring (11) gelegt ist und zum Aufspannen einen auf der Innenseite (15) der Abdeckungsscheibe (6) angeordneten Hohlsaum (13) aufweist, wobei in diesem eine Spannschnur (14) angeordnet ist.

17. Laufrad nach Anspruch 2,
dadurch **gekennzeichnet**,
daß die Bespannung (12) mit dem Spannring (11) verklebt ist.

18. Laufrad nach wenigstens einem der vorangehenden Ansprüche,
dadurch **gekennzeichnet**,
daß die Bespannung (12) aus einem Gewebe gebildet ist.

19. Laufrad nach wenigstens einem der vorangehenden Ansprüche,
dadurch **gekennzeichnet**,
daß die Bespannung (12) aus einem Film gebildet ist.

20. Laufrad nach wenigstens einem der vorangehenden Ansprüche,
dadurch **gekennzeichnet**,
daß eine Profilscheibe (23) konzentrisch zur Nabe (5) und auf der Innenseite (15) der Abdeckungsscheibe (6) angeordnet ist.

21. Laufrad nach wenigstens einem der vorangehenden Ansprüche,
dadurch **gekennzeichnet**,
daß im Bereich eines Ventils (25) in der Abdeckungsscheibe (6) eine Zugangsöffnung (24) ausgebildet ist, in welche zumindest zum Spreizen des Spannrings (11) eine Spreizvorrichtung (26; 32, 34) angeordnet ist, wobei der Spannring eine Lücke (27) aufweist und die Spreizvorrichtung mit die Lücke begrenzenden freien Enden (28, 29) des Spannrings (11) bewegungsverbunden ist.

22. Laufrad nach Anspruch 21,
dadurch **gekennzeichnet**,
daß die Spreizvorrichtung (26; 32, 34) als in Umfangsrichtung (31) des Spannrings (11) wirkendes Federelement (32) ausgebildet ist.

23. Laufrad nach wenigstens einem der vorangehenden Ansprüche,
dadurch **gekennzeichnet**,
daß die freien Enden (28, 29) des Spannrings (11) im wesentlichen in radialer Richtung nach innen gebogen sind und die Spreizvorrichtung (26) eine auf die Enden einwirkende, drehbare Exzenterscheibe aufweist.

24. Laufrad nach wenigstens einem der vorangehenden Ansprüche,
dadurch **gekennzeichnet**,
daß die freien Enden (28, 29) im wesentlichen in radialer Richtung nach innen und voneinander weggebogen sind und die Spreizeinrichtung (36, 34) einen entlang der Enden verschiebbar gelagerten Spreizkeil (34) aufweist.

25. Laufrad nach wenigstens einem der vorangehenden Ansprüche,
dadurch **gekennzeichnet**,
daß ein im wesentlichen U-förmiger, elastischer Rahmen (35) als Begrenzung der Zugangsöffnung (24) in der Abdeckungsscheibe (6) angeordnet ist und die freien Enden (28, 29) des Spannrings (11) in die U-Schenkel (36) des Rahmens eingeschoben sind, wobei der Spreizkeil (34) zwischen den U-Schenkeln verschiebbar gelagert ist.

26. Laufrad nach Anspruch 25,
dadurch **gekennzeichnet**,
daß der Spreizkeil (34) und die U-Schenkel (36) eine Nut-Feder-Verzahnung aufweisen.

27. Laufrad nach wenigstens einem der vorangehenden Ansprüche,
dadurch **gekennzeichnet**,
daß die U-Schenkel (36) zur Festlegung des Spreizkeils (34) in seiner Spreizstellung eine Einrastnase (39) aufweisen.

28. Laufrad nach wenigstens einem der vorangehenden Ansprüche,
dadurch **gekennzeichnet**,
daß eine Verschlußklappe (40) an dem dem Felgenprofil (4) gegenüberliegenden Ende (30) des Spreizkeils (34) verschwenkbar gelagert ist, wobei Verschlußklappe und Spreizkeil in dessen Spreizposition die Zugangsöffnung (24) abdecken.

29. Laufrad nach Anspruch 28,
dadurch **gekennzeichnet**,
daß die Verschlußklappe (40) und der Spreizkeil (34) formschlüssig in der Abdeckungsscheibe (6) angeordnet sind.

30. Laufrad nach wenigstens einem der vorangehenden Ansprüche,
dadurch **gekennzeichnet**,
daß die Verschlußklappe (40) zur Verrastung mit dem U-Steg (37) des Rahmens (35) eine Schnappnase (42) aufweist.

31. Laufrad nach wenigstens einem der vorangehenden Ansprüche,
dadurch **gekennzeichnet**,
daß in der Verschlußklappe (40) ein Fingerloch (43) ausgebildet ist.

32. Laufrad nach wenigstens einem der vorangehenden Ansprüche,
dadurch **gekennzeichnet**,
daß zwischen Verschlußklappe (40) und Spreizkeil (34) ein Federelement (44) zur Kraftbeaufschlagung der Verschlußklappe in Schließrichtung (47) angeordnet ist.

33. Laufrad nach wenigstens einem der vorangehenden Ansprüche,
dadurch **gekennzeichnet**,
daß die Zugangsöffnung (24) diametral gegenüberliegend zum Felgenstoß des Felgenprofils (4) angeordnet ist.

34. Laufrad nach wenigstens einem der vorangehenden Ansprüche,
dadurch **gekennzeichnet**,
daß das Gewicht von U-Rahmen (35), Spreizkeil (34), Verschlußklappe (40) und Ventil (25) im wesentlichen identisch mit der Unwucht am Felgenstoß ist.

35. Laufrad nach wenigstens einem der vorangehenden Ansprüche,
dadurch **gekennzeichnet**,
daß bei geschlossenem Spannring (11) dieser an wenigstens einer Stelle eine von der Rastnut (7) fortweisende Eingriffsdelle (45) aufweist.

36. Laufrad nach wenigstens einem der vorangehenden Ansprüche,
dadurch **gekennzeichnet**,
daß zwischen Rastnut (7) und Spannring (11) stellenweise elastische Abstützelemente (46) angeordnet sind.

37. Laufrad nach wenigstens einem der vorangehenden Ansprüche,
dadurch **gekennzeichnet**,
daß das Felgenprofil (4) am Felgenstoß (76) durch eine Schäftung verbunden ist.

38. Laufrad nach Anspruch 37,
dadurch **gekennzeichnet**,
daß zum Schäften eine Felgenstoßebene (69) durch das Felgenprofil (4) zwischen den Felgenflanken (20, 20') verläuft, deren Flächennormale (77) unter einem spitzen Winkel zur Umfangsrichtung (31) verläuft.

39. Laufrad nach Anspruch 37 oder 38,
dadurch **gekennzeichnet**,
daß im Bereich des Felgenstoßes (76) wenigstens eine Innenhülse (70, 71) in der Hohlkammer (10) angeordnet ist, welche sich im wesentlichen auf beiden Seiten des Felgenstoßes (76) in Umfangsrichtung (31) gleich weit erstreckt.

40. Laufrad nach Anspruch 39,
dadurch **gekennzeichnet**,
daß Stirnseiten (72, 73; 74, 75) der Innenhülse (70, 71) Im wesentlichen parallel zur Felgenstoßebene (69) verlaufen.

41. Laufrad nach wenigstens einem der vorangehenden Ansprüche,
dadurch **gekennzeichnet**,
daß jeweils eine Innenhülse (70, 71) in einer der durch den Verstärkungssteg (57) getrennten Teilkammern der Hohlkammer (16) angeordnet ist.

42. Laufrad nach wenigstens einem der vorangehenden Ansprüche,
dadurch **gekennzeichnet**,
daß auf den Felgenflanken (20, 20') eine feinkörnige Keramikschicht (66, 67) aufgespritzt ist.

43. Laufrad nach Anspruch 42,
dadurch **gekennzeichnet**,
daß die Keramikschicht (66, 67) eine konzentrisch zur Nabe (5) verlaufende Spannungsfuge (68) aufweist.

## Claims

1. A wheel (1) for a bicycle (2) having a plurality of spokes (3) arranged between a circumferential rim (4) and a hub (5), having at least one disk cover (6) removably mounted thereto to cover the wheel laterally,
**characterized in that**
the rim (4) is laterally provided with at least one circumferential catch groove (7) for the disk cover (6) to be inserted in said groove.

2. A bicycle wheel according to claim 1,
**characterized in that**
the disk cover (6) consists of an essentially circular hoop (11) and a cover (12) stretched over said hoop.

3. A bicycle wheel according to claim 1,
**characterized in that**
the catch groove (7) is a groove (7) circumferentially located in the section between the rim side wall (20) and the spoke hole side (22), holding in place the disk cover (6) with a thickened edge (11) inserted under tension therein.

4. A bicycle wheel according to claim 3,
**characterized in that**
the thickened outer edge (11) incorporates an elastic reinforcement of preferably circular cross section.

5. A bicycle wheel according to claim 4,
**characterized in that**
the edge reinforcement is tubular.

6. A bicycle wheel of claim 3,
**characterized in that**
the grooves (7) have an essentially circular cross-section.

7. A bicycle wheel according to claim 1,
**characterized in that**
the disk cover (6) is provided with a peripheral ring-shaped web (11) on the inside thereof by means of which the disk cover (6) can be fixed in the catch groove (7).

8. A bicycle wheel in accordance with at least one of the preceding claims,
**characterized in that**
the catch grooves (7) and (7') are semicircular.

9. A bicycle wheel in accordance with at least one of the preceding claims,
**characterized in that**
the rim profile (4) is asymmetric in respect to the vertical centerline (55), the rim side wall (20) on the multi-speed gear side (10) of the wheel being essentially parallel to the centerline (55), whereas the opposite rim side wall (20') being outwardly inclined toward the hub (5) by enclosing the acute angle (62) with the centerline.

10. A bicycle wheel in accordance with at least one of the preceding claims,
**characterized in that**
the catch groove (7') assigned to the inclined rim side wall (20') is swiveled outward at the acute angle (63) in relation to the catch groove (7) of the rim side wall (20).

11. A bicycle wheel in accordance with at least one of the preceding claims,
**characterized in that**
the swivel angle (63) and the angle of inclination (62) are essentially equal.

12. A bicycle wheel in accordance with at least one of the preceding claims,
**characterized in that**
the spoke holes (18) and (18') provided in the rim (4) for insertion of spokes (3) and (3') are offset from the centerline (55) toward the inclined rim wall side (20').

13. A bicycle wheel in accordance with at least one of the preceding claims,
**characterized in that**
the spoke holes (18) and (18') on the side of the inclined side wall (20') of the rim (4) are arranged relative to the centerline (55).

14. A bicycle wheel in accordance with at least one of the preceding claims,
**characterized in that**
the spoke (3') inserted in the spoke hole (18') closer to the inclined rim side wall (20') is enclosing a greater angle with the spoke hole centerline (58) than the spoke (3) inserted in the spoke hole (18).

15. A bicycle wheel in accordance with at least one of the preceeding claims, having a hollow cross-section rim
**characterized in that**
the hollow cross section (4) is provided with an essentially vertical reinforcing rib (57) located in relation to the centerline on the opposite side of the spoke holes (18) and (18').

16. A bicycle wheel according to claim 2,
**characterized in that**
the cover (12) is stretched around the hoop (11) and is provided with a casing (13) on the inside (15) of the disk cover for tightening, a tightening cord (14) being incorporated in said casing.

17. A bicycle wheel of claim 2,
**characterized in that**
the cover (12) is adhesively joined to the hoop 11.

18. A bicycle wheel in accordance with at least one of the preceding claims,
**characterized in that**
the cover is made of a fabric.

19. A bicycle wheel in accordance with at least one of the preceding claims,
**characterized in that**
the cover is made of a film.

20. A bicycle wheel in accordance with at least one of the preceeding claims,
**characterized in that**
the profiled disk (23) is arranged concentric with the hub (5) and on the inside (15) of the disk cover (6).

21. A bicycle wheel in accordance with at least one of the preceding claims,
**characterized in that**
there is an access opening (24) provided in the disk wheel (6) in the vicinity of the valve (25) into which an expanding means (26; 32, 34) is incorporated at least for expanding the hoop (11), said hoop having a gap (27), and said expanding means being movably interlocked with the free ends (28, 29) of the hoop (11) which confine said gap.

22. A bicycle wheel according to claim 21,
**characterized in that**
the expanding means (26; 32, 34) consists of a spring element (32) acting in the direction of the circumference (31) of the hoop (11).

23. A bicycle wheel in accordance with at least one of the preceding claims,
**characterized in that**
the free ends (28, 29) of the hoop (11) are essentially bent inward in a radial direction, and the expanding means (26) is provided with a rotating eccentric disk interacting with said ends.

24. A bicycle wheel in accordance with at least one of the preceding claims,
**characterized in that**
the free ends (28, 29) are essentially bent inward in a radial direction and away from each other, and the expanding means (36, 34) consists of an expanding wedge (34) slidingly arranged on said ends.

25. A bicycle wheel in accordance with at least one of the preceding claims,
**characterized in that**
an essentially U-shaped elastic frame (35) is provided to confine the access opening (24) in the disk cover (6), and the free ends (28, 29) of the hoop (11) are fed into the U-legs (36) of said frame, the expanding wedge (34) being slidingly arranged between the U-legs.

26. A bicycle wheel according to claim 25,
**characterized in that**
the expanding wedge (34) and the U-legs (36) are provided with a tongue and groove interlock.

27. A bicycle wheel in accordance with at least one of the preceding claims,
**characterized in that**
the U-legs (36) are provided with a tongue (39) for fixing the expanding wedge (34) in its expanded position.

28. A bicycle wheel in accordance with at least one of the preceding claims,
**characterized in that**
the lid (40) is pivotably fastened to the end (30) of the expanding wedge (34) opposite the rim (4), the lid and the expanding wedge in its expanded position sealing the access opening (24).

29. A bicycle wheel according to claim 28,
**characterized in that**
the lid (40) and the expanding wedge (34) are arranged flush with the disk cover (6).

30. A bicycle wheel in accordance with at least one of the preceding claims,
**characterized in that**
the lid (40) is provided with a snap nose (42) for engagement with the web (37) of the U-shaped frame (35).

31. A bicycle wheel in accordance with at least one of the preceding claims,
**characterized in that**
the lid is provided with a fingerhole (43).

32. A bicycle wheel in accordance with at least one of the preceding claims,
**characterized in that**
a spring element (44) is arranged between the lid (40) and the expanding wedge (34) for force-actuated closing of said lid in the direction (47).

33. A bicycle wheel in accordance with at least one of the preceding claims,
**characterized in that**
the valve access opening (24) is located diametrically opposed to the rim joint of rim (4).

34. A bicycle wheel in accordance with at least one of the preceding claims,
**characterized in that**
the U-frame (35), the expanding wedge (34), the lid (40), and the valve (25) supply essentially the weight needed to balance the wheel which is unbalanced due to the rim joint.

35. A bicycle wheel in accordance with at least one of the preceding claims,
**characterized in that**
the hoop (11) being completely closed is provided with an access dent (45) facing away from the catch groove (7) at least at one point.

36. A bicycle wheel in accordance with at least one of the preceding claims,
**characterized in that**
supporting elements (46) are arranged at intervals between the catch groove (7) and the hoop (11).

37. A bicycle wheel in accordance with at least one of the preceding claims,
**characterized in that**
the rim (4) is joined by beveling the joint faces (76).

38. A bicycle wheel according to claim 37,
**characterized in that**
the beveled joint plane (69) extends across the rim (4) between the rim side walls (20, 20'), the plane's normal meeting the circumference (31) at an acute angle.

39. A bicycle wheel according to claim 37 or 38,
**characterized in that**
in the rim joint area (76) there is at least one socket (70, 71) inserted inside the hollow cross section (10) and extending essentially at equal length to either side of the rim joint (76) in the direction of the circumference (31).

40. A bicycle wheel according to claim 39,
**characterized in that**
the faces (72, 73; 74, 75) of the sockets (70, 71) are essentially parallel to the rim joint plane (69).

41. A bicycle wheel in accordance with at least one of the preceding claims,
**characterized in that**
one each of the sockets (70, 71) is inserted in one of the subsections obtained by dividing the hollow cross section by the reinforcing rib (57).

42. A bicycle wheel in accordance with at least one of the preceding claims,
**characterized in that**
the rim side walls (20, 20') are provided with a fine-grained ceramic coating (66, 67) by spraying.

43. A bicycle wheel according to claim 42,
**characterized in that**
the ceramic coating (66, 67) is provided with a stress-relieving gap (68) concentric with hub (5).

## Revendications

1. Roue (1) de bicyclette (2), qui comprend une pluralité de rayons (3) disposés entre un profil de jante (4) tournant et un moyeu (5), dans lequel au moins une disque de cache (6) comme revêtement latéral de la roue (1) est disposée, de façon détachable, à la dernière, **caractérisé en ce** qu'au moins une encoche d'arrêt (7) périphérique latérale est formée dans ledit profil de jante (4), à l'encliquetage de ladite disque de cache (6).

2. Roue de bicyclette selon la revendication 1,
**caractérisé en ce**
que ladite disque de cache (6) est constituée par un collier tendeur (11) essentiellement circulaire et par une couverture (12) étirée sur ledit collier.

3. Roue de bicyclette selon la revendication 1,
**caractérisé en ce**
que ladite encoche d'arrêt est prévue sous forme d'une rainure (7) périphérique dans la zone de transition entre le flanc de la jante (20) et la face interne de la jante (22), dans laquelle est tenu ladite disque de cache (6) en état enfoncé, qui est prévue d'un bord (11) agrandi en épaisseur.

4. Roue de bicyclette selon la revendication 3,
**caractérisé en ce**
qu'un bourrelet élastique, de préférence à section transversale circulaire, est disposé dans ledit bord (11) agrandi en épaisseur.

5. Roue de bicyclette selon la revendication 4,
**caractérisé en ce**
que ledit bourrelet est tubulaire.

6. Roue de bicyclette selon la revendication 3,
**caractérisé en ce**
que lesdites rainures (7) présentent une section transversale essentiellement circulaire.

7. Roue de bicyclette selon la revendication 1,
**caractérisé en ce**
que ladite disque de cache (6) est configurée à une nervure circulaire (11) périphérique sur sa face interne, qui permet l'immobilisation de ladite disque de cache (6) dans ladite encoche d'arrêt.

8. Roue de bicyclette selon au moins une quelconque des revendications précédentes,
**caractérisé en ce**
que lesdites encoches d'arrêt (7, 7') présentent une configuration semi-circulaire.

9. Roue de bicyclette selon au moins une quelconque des revendications précédentes,
**caractérisé en ce**
que le profil de jante (4) est formé de façon asymétrique par rapport à une ligne médiane verticale (55), le flanc de jante (20), qui s'étend du côté d'une couronne dentée d'un dérailleur de bicyclette, s'étend essentiellement en parallèlle à ladite ligne médiane (55), pendant que le flanc de jante (20') opposé est incliné à l'extérieur à un angle d'inclinaison aigu (62) relatif à ladite ligne médiane, vers ledit moyeu (5).

10. Roue de bicyclette selon au moins une quelconque des revendications précédentes,
**caractérisé en ce**
que l'encoche d'arrêt (7'), qui corresponde audit flanc de jante incliné (20'), est pivotée à l'extérieur par un angle de pivotement aigu (63), relativement à l'encoche d'arrêt (7) qui corresponde audit autre flanc de jante (20).

11. Roue de bicyclette selon au moins une quelconque des revendications précédentes,
**caractérisé en ce**
que ledit angle de pivotement (63) et ledit angle d'inclinaison (62) sont essentiellement égaux.

12. Roue de bicyclette selon au moins une quelconque des revendications précédentes,
**caractérisé en ce**
que des trous de rayonnage (18, 18'), qui sont formés dans ledit profil de jante (4) pour le montage desdits rayons (3, 3'), se trouvent en déport par rapport à ladite ligne médiane (55), en étant décalés vers ledit flanc de jante incliné (20').

13. Roue de bicyclette selon au moins une quelconque des revendications précédentes,
**caractérisé en ce**
que lesdits trous de rayonnage (18, 18') sont disposé sur la face dudit profil de jante (4) qui corresponde audit flanc de jante incliné (20'), par rapport à ladite ligne médiane (55).

14. Roue de bicyclette selon au moins une quelconque des revendications précédentes,
**caractérisé en ce**
que le rayon (3'), qui est disposé dans le trou de rayonnage (18') plus proche audit flanc de jante incliné (20'), forme, par rapport à une ligne médiane verticale par un trou de rayonnage (58), qui passe entre lesdits trous de rayonnage (18, 18'), un angle aigu qui est plus grand que l'angle formé par le rayon (3) disposé dans l'autre trou de rayonnage (18).

15. Roue de bicyclette selon au moins une quelconque des revendications précédentes,
à un profil de jante formé par un profil creux,
**caractérisé en ce**
que ledit profil creux (4) comprend une traverse de renfort (57) essentiellement verticale, opposée auxdits trous de rayonnage (18, 18') par rapport à ladite ligne médiane.

16. Roue de bicyclette selon la revendication 2,
**caractérisé en ce**
que ladite couverture (12) est placée autour dudit collier tendeur (11) et présente, à son étirage, un ourlet à jour (13) prévu sur la face interne (15) de ladite disque de cache (6), un cordon tendeur (14) étant disposé dans cet ourlet à jour.

17. Roue de bicyclette selon la revendication 1,
**caractérisé en ce**
que ladite couverture (12) est fixée audit collier tendeur (11) par collage.

18. Roue de bicyclette selon au moins une quelconque des revendications précédentes,
**caractérisé en ce**
que ladite couverture (12) est formée par un tissu.

19. Roue de bicyclette selon au moins une quelconque des revendications précédentes,
**caractérisé en ce**
que ladite couverture (12) est formée par un film.

20. Roue de bicyclette selon au moins une quelconque des revendications précédentes,
**caractérisé en ce**
qu'une disque profilée (23) est disposée, à arrangement concentrique par rapport audit moyeu (5), sur ladite face interne (15) de ladite disque de cache (6).

21. Roue de bicyclette selon au moins une quelconque des revendications précédentes,
**caractérisé en ce**
que dans la zone d'une valve (25), une ouverture d'accès (24) est formée dans ladite disque de cache (6), dans laquelle est disposé un dispositif écarteur (26; 32, 34) au moins à l'expansion dudit collier tendeur (11), ce collier tendeur présentant un interstice (27) et ledit dispositif écarteur étant relié à mouvement à des extrémités libres (28, 29) dudit collier tendeur (11), qui délimitent ledit interstice.

22. Roue de bicyclette selon la revendication 21,
**caractérisé en ce**
que ledit dispositif écarteur (26; 32, 34) est configuré sous forme d'un élément élastique (32), qui produit de l'effet en sens périphérique (31) dudit collier tendeur (11).

23. Roue de bicyclette selon au moins une quelconque des revendications précédentes,
**caractérisé en ce**
que lesdites extrémités libres (28, 29) dudit collier tendeur (11) sont pliées à l'intérieur, essentiellement en sens radial, et en ce que ledit dispositif écarteur (26) présente une disque de l'excentrique rotative à agir sur lesdites extrémités.

24. Roue de bicyclette selon au moins une quelconque des revendications précédentes,
**caractérisé en ce**
que lesdites extrémités libres (28, 29) sont pliées à l'intérieur, essentiellement en sens radial, en étant écartées l'une de l'autre, et en ce que ledit dispositif écarteur (36, 34) comprend une cale d'écartement (34) logée à être déplacée le long desdites extrémités.

25. Roue de bicyclette selon au moins une quelconque des revendications précédentes,
**caractérisé en ce**
qu'un cadre élastique (35), essentiellement en U, est disposé à limiter ladite ouverture d'accès (24) dans ladite disque de cache (6), et en ce que lesdites extrémités libres (28, 29) dudit collier tendeur (11) sont insérées dans les branches en U (36) dudit cadre, ladite cale d'écartement (34) étant logée à être déplacée entre les branches en U.

26. Roue de bicyclette selon la revendication 25,
**caractérisé en ce**
ladite cale d'écartement (34) et lesdites branches en U (36) présentent une denture male femelle.

27. Roue de bicyclette selon au moins une quelconque des revendications précédentes,
**caractérisé en ce**
que lesdites branches en U (36) présentent un ergot d'encliquetage (39) pour l'immobilisation de ladite cale d'écartement (34) dans sa position d'écartement.

28. Roue de bicyclette selon au moins une quelconque des revendications précédentes,
**caractérisé en ce**
qu'une trappe obturatrice (40) est logée, de façon pivotable, à l'extrémité (30) de ladite cale d'écartement (34), qui est opposée audit profil de jante (4), ladite trappe obturatrice et ladite cale d'écartement, en sa position d'écartement, couvrant ladite ouverture d'accès (24).

29. Roue de bicyclette selon la revendication 28,
**caractérisé en ce**
que ladite trappe obturatrice (40) et ladite cale d'écartement (34) sont disposées, à adhérence géométrique, dans ladite disque de cache (6).

30. Roue de bicyclette selon au moins une quelconque des revendications précédentes,
**caractérisé en ce**
que ladite trappe obturatrice (40) comprend un ergot à déclic (42) pour l'encliquetage par ladite branche en U (37) dudit cadre (35).

31. Roue de bicyclette selon au moins une quelconque des revendications précédentes,
**caractérisé en ce**
qu'un trou de doigt (43) est formé dans ladite trappe obturatrice (40).

32. Roue de bicyclette selon au moins une quelconque des revendications précédentes,
**caractérisé en ce**
qu'un élément élastique (44) est disposé entre ladite trappe obturatrice (40) est ladite cale d'écartement (34) afin de faire agir une force sur ladite trappe obturatrice en sens de fermeture (47).

33. Roue de bicyclette selon au moins une quelconque des revendications précédentes,
**caractérisé en ce**
que ladite ouverture d'accès (24) est disposée à une position diamétralement opposée à la jointure de jante dudit profil de jante (4).

34. Roue de bicyclette selon au moins une quelconque des revendications précédentes,
**caractérisé en ce**
que le poids dudit cadre en U (35), de ladite cale d'écartement (34), de ladite trappe obturatrice (40) et de ladite valve (25) est essentiellement identique avec le déséquilibre à la jointure de jante.

35. Roue de bicyclette selon au moins une quelconque des revendications précédentes,
**caractérisé en ce**
que ledit collier tendeur (11), en son état fermé, présente, à au moins une position, une bosse de prise (45) qui part de ladite encoche d'arrêt (7).

36. Roue de bicyclette selon au moins une quelconque des revendications précédentes,
**caractérisé en ce**
que des éléments d'appui (46), à élasticité localisée, sont disposés entre ladite encoche d'arrêt (7) et ledit collier tendeur (11).

37. Roue de bicyclette selon au moins une quelconque des revendications précédentes,
**caractérisé en ce**
que ledit profil de jante (4) est relié à ladite jointure de jante (76) par un assemblage en biseau.

38. Roue de bicyclette selon la revendication 37,
**caractérisé en ce**
qu'un plan de jointure de jante (69) passe par ledit profil de jante (4), entre lesdits flancs de jante (20, 20'), pour l'assemblage en biseau, ce plan présentant une normale de surface (77) qui s'étend à un angle aigu par rapport au sens périphérique.

39. Roue de bicyclette selon la revendication 37 ou 38,
**caractérisé en ce**
qu'au moins une douille intérieure (70, 71) est disposée dans la chambre creuse (10) dans la zone de ladite jointure de jante (76), qui a une étendue essentiellement égale des deux côtés de ladite jointure de jante (76) en sens périphérique.

40. Roue de bicyclette selon la revendication 39,
**caractérisé en ce**
que des fronts (72, 73; 74, 75) de ladite douille intérieure (70, 71) s'étendent essentiellement en parallèle audit plan (69) de la jointure de jante.

41. Roue de bicyclette selon au moins une quelconque des revendications précédentes,
**caractérisé en ce**
qu'une douille intérieure (70, 71) respective est disposée dans une des chambres partielles de ladite chambre creuse (16), qui sont séparées par ladite traverse de renfort (57).

42. Roue de bicyclette selon au moins une des revendications précédentes,
**caractérisé en ce**
qu'une couche céramique (66, 67) à grain fin est appliquée au pistolet sur lesdits flancs de jante (20, 20').

43. Roue de bicyclette selon la revendication 42,
**caractérisé en ce**
que ladite couche céramique (66, 67) présente un joint de tension (68) qui s'étend à concentricité par rapport audit moyeu (5).
